(19) Europäisches Patentamt
European Patent Office
Office européen des brevets

(11) **EP 2 813 547 B2**

(12) **NEW EUROPEAN PATENT SPECIFICATION**
After opposition procedure

(45) Date of publication and mention
of the opposition decision:
**12.06.2019   Bulletin 2019/24**

(45) Mention of the grant of the patent:
**01.06.2016   Bulletin 2016/22**

(21) Application number: **14171735.5**

(22) Date of filing: **10.06.2014**

(51) Int Cl.:
***C08L 67/02*** *(2006.01)*      *C08K 3/34* *(2006.01)*
***C08L 33/08*** *(2006.01)*

(54) **POLYESTER RESIN COMPOSITION AND ARTICLE INCLUDING THE SAME**

Polyesterharzzusammensetzung und Artikel damit

Composition de résine de polyester et article comprenant celle-ci

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2013   KR 20130066109**

(43) Date of publication of application:
**17.12.2014   Bulletin 2014/51**

(73) Proprietor: **Lotte Advanced Materials Co., Ltd.**
**Yeosu-si Jeollanam-do 59616 (KR)**

(72) Inventors:
• **Lee, Jeong-Min**
**437-711 Uiwang-si, Gyeonggi-do (KR)**
• **Kwon, Kee-Hae**
**437-711 Uiwang-si, Gyeonggi-do (KR)**
• **Kim, In-Chol**
**437-711 Uiwang-si, Gyeonggi-do (KR)**
• **Park, Jung-Eun**
**437-711 Uiwang-si, Gyeonggi-do (KR)**
• **Hong, Chang-Min**
**437-711 Uiwang-si, Gyeonggi-do (KR)**

(74) Representative: **Dannenberger, Oliver Andre et al**
**Abitz & Partner**
**Patentanwälte mbB**
**Postfach 86 01 09**
**81628 München (DE)**

(56) References cited:
**EP-A1- 1 942 144        WO-A1-2007/089598**
**WO-A2-2007/087346        DE-A1-102005 009 201**
**US-A1- 2008 161 468**

EP 2 813 547 B2

**Description**

A polyester resin composition and an article including the same are disclosed.

A conventional metal-deposited reflector such as a head lamp bezel for a vehicle, a reflector, a lighting instrument, and the like is manufactured by coating a primer on a resin article and then, depositing a metal to increase surface smoothness on a light reflection plane thereof.

However, this conventional method is not environment-friendly since the primer includes an organic solvent and has lots of problems in terms of a cost and productivity since it takes long to volatile the organic solvent and form a film.

Accordingly, a direct deposition method of directly depositing a metal on the surface of a resin article without coating a primer has been recently utilized more.

The resin article requires high surface flatness for directly depositing the metal and particularly, needs generation of minimum gases and migration of a thermal decomposition material in order to be applied to a head lamp bezel for a vehicle, a lighting instrument, and the like.

On the other hand, a polybutylene terephthalate (PBT) resin has considerably excellent injection molding properties due to a fast crystallization rate but lacks releasing properties in a mold and may noticeably cause releasing defects on the surface of the mold.

Accordingly, an appropriate lubricant may be used to obtain appropriate releasing properties of the resin adhered to the mold. However, the lubricant in general causes migration of gases and a thermal decomposition material when the resin is put under a high temperature environment. Accordingly, it is important to appropriately select the lubricant in order to minimize the negative influence.

For example, Korean Patent Laid-Open Publication No. 2002-0062403 discloses a thermoplastic polyester resin composition manufactured by adding an inorganic filler and montan wax to a blend composition of polybutylene terephthalate and polyethylene terephthalate.

The composition has excellent surface smoothness and the like, but a problem of generating gas and a thermal decomposition material in a large amount due to characteristics of the montan wax when allowed to stand at a high temperature for a long time.

EP 1942144 discloses a polyester resin composition suitable as a material for a metal-deposited reflector, comprising 100 parts by weight of a polybutylene terephthalate base resin; 10 to 50 parts by weight of a polyethylene terephthalate glycol resin; 0.1 to 10 parts by weight of an inorganic filler, including talc; and 0.01 to 5 parts by weight of a resin stabilizer.

Thus, it is the object of the present invention to overcome above disadvantages of the prior art and to provide a polyester resin composition being capable of forming a smooth metal deposition layer through a direct metal deposition, including a volatile component in a small amount at a high temperature, and having excellent releasing properties and heat resistance.

A further object of the present invention is to provide an article manufactured by using the polyester resin composition.

Said object has been achieved by the provision of a polyester resin composition that includes (A) 100 parts by weight of polybutylene terephthalate, and (B) 0.01 to 1 part by weight of talc and (C) 0.01 to 0.7 parts by weight of an ethylene acrylic acid-based copolymer based on 100 parts by weight of the polybutylene terephthalate (A), wherein other polyesters except for the polybutylene terephthalate (A) are less than 10% by weight.

The polybutylene terephthalate (A) may have a viscosity ranging from 0.6 to 1.5 dl/g.

The talc (B) may have an average particle diameter ranging from $0.1\mu m$ to $10\mu m$.

In another embodiment of the present invention, an article obtainable by using a polyester resin composition, the composition comprising (A) 100 parts by weight of polybutylene terephthalate, and (B) 0.01 to 1 parts by weight of talc and (C) 0.01 to 1 parts by weight of an ethylene acrylic acid-based copolymer based on 100 parts by weight of the polybutylene terephthalate (A), wherein other polyesters except for the polybutylene terephthalate (A) are less than 10% by weight, wherein the article is a head lamp bezel for a vehicle or a reflector is provided.

The article may have a haze change of 0.1 to 4.0%, surface roughness (Ra) of 1 to 20 nm, and thermal distortion temperature (HDT) of 180 to 190°C in a fogging evaluation under a condition of 250°C/3 hours.

A polyester resin composition according to one embodiment of the present invention and an article using the same may form a smooth metal deposition layer through a direct metal deposition, include a volatile component in a small amount at a high temperature, and have excellent releasing properties and heat resistance at a high temperature. Hereinafter, embodiments of the present invention are described in detail. However, these embodiments are exemplary, and this disclosure is not limited thereto.

In the present specification, as used herein, when a definition is not otherwise provided, "alkyl group" refers to "a saturated alkyl group without any alkene group or alkyne group"; or "an unsaturated alkyl group" including at least one alkene group or alkyne group. The term "alkene group" may refer to a substituent in which at least two carbon atoms are bound with at least one carbon-carbon double bond, and the term "alkynyl group" refers to a substituent in which at least two carbon atoms are bound with at least one carbon-carbon triple bond. The alkyl group may be a branched, linear, or cyclic alkyl group.

The alkyl group may be a $C_1$ to $C_{20}$ alkyl group, specifically a $C_1$ to C6 lower alkyl group, a $C_7$ to $C_{10}$ middle

In the specification, when a definition is not otherwise provided, "copolymerization" refers to block copolymerization, random copolymerization, graft copolymerization, or alternating copolymerization, and "copolymer" may refer to a block copolymer, a random copolymer, a graft copolymer, or an alternating copolymer.

In one embodiment of the present invention, provided is a polyester resin composition including (A) 100 parts by weight of polybutylene terephthalate, and (B) 0.01 to 1 part by weight of talc and (C) 0.01 to 1 part by weight of an ethylene acrylic acid copolymer based on 100 parts by weight of the polybutylene terephthalate (A).

Hereinafter, each component in the polyester resin composition is specifically described.

## (A) Polybutylene Terephthalate

The polybutylene terephthalate (PBT) refers to a polyester containing a butylene terephthalate unit as a main repeating unit, and refers to a polybutylene terephthalate homopolymer that consists of a butylene terephthalate unit alone, and a polybutylene terephthalate copolymer that consists of a butylene terephthalate unit and other repeating unit(s).

The polybutylene terephthalate may include a polybutylene terephthalate polymer condensation-polymerized by directly esterifying or ester-exchanging terephthalic acid or dimethyl terephthalate with 1,4-butanediol.

In addition, a copolymer obtained by copolymerizing the polybutylene terephthalate with an impact-improving component such as polytetramethylene glycol (PTMG), polyethylene glycol (PEG), polypropylene glycol (PPG), aliphatic polyester, aliphatic polyamide, and the like may be used to improve impact strength of the resin and modify the surface thereof.

In addition, the polybutylene terephthalate may have an intrinsic viscosity [η] of 0.6 to 1.5 dl/g and specifically, 0.6 to 1.4 dl/g, 0.6 to 1.3 dl/g, 0.6 to 1.2 dl/g, 0.6 to 1.1 dl/g, 0.7 to 1.5 dl/g, 0.8 to 1.5 dl/g which may be measured according to ASTM D2857. When the polybutylene terephthalate has an intrinsic viscosity within the range, a polyester resin composition including the polybutylene terephthalate and an article using the same may secure much excellent heat resistance.

The polyester resin composition includes 100 parts by weight of the polybutylene terephthalate and thus, has excellent heat resistance and excellent appearance characteristics such as smoothness, haze, and the like, compared with a composition including other polyester resins, for example, polyethylene terephthalate. In addition, the polyester resin composition has much excellent heat resistance and appearance characteristics compared with a composition including polybutylene terephthalate and other polyester resins.

Meanwhile, other polyesters except for the polybutylene terephthalate (A) may be preferably 0 to 5 % by weight, and more preferably 0 to 3% by weight, and particularly preferably 0% by weight, i.e., other polyesters may not be contained.

## (B) Talc

The talc is a kind of inorganic filler and indicates magnesium silicate hydrate. The talc has a chemical formula represented by $Mg_3(OH)_2Si_4O_{10}$ and a refractive index of 1.53 to 1.56 and may be scale-like, bladed, or sheet-shaped. The talc may include aluminum oxide, calcium oxide, iron oxide, and the like in a small amount along with silicic acid and magnesium oxide. The talc may be commercially available.

Since the talc has low hardness and excellent heat resistance and chemical stability, the polyester resin composition including this talc may secure excellent heat resistance and appearance characteristics compared with a composition containing other inorganic fillers such as kaolin, clay, and the like.

The talc may have an average particle diameter of 0.1 to 10μm and specifically, 0.1 to 9μm, 0.1 to 8μm, 0.1 to 7μm, 0.1 to 6μm, 0.1 to 5μm, 0.1 to 4μm, and 0.1 to 3μm. When the talc has an average particle diameter within the range, a polyester resin composition including this talc and an article using the same may have excellent heat resistance and appearance characteristics.

The polyester resin composition may include 0.01 to 1 part by weight of the talc based on 100 parts by weight of the polybutylene terephthalate (A). Specifically, the talc may be included in an amount of 0.01 to 0.9 parts by weight, 0.01 to 0.8 parts by weight, 0.01 to 0.7 parts by weight, 0.01 to 0.6 parts by weight, 0.01 to 0.5 parts by weight, 0.1 to 1 part by weight, 0.1 to 0.9 parts by weight, 0.1 to 0.8 parts by weight, 0.1 to 0.7 parts by weight, 0.1 to 0.6 parts by weight, or 0.1 to 0.5 parts by weight.

When the talc is included within the range, a polyester resin composition including this talc and an article using the same may form a smooth metal deposition layer, include a volatile component in a small amount at a high temperature, and secure excellent releasing properties and heat resistance.

In particular, when the talc is included in an amount of greater than 1 part by weight, a smooth metal deposition layer is difficult to form due to increased surface roughness when a metal is directly deposited, and thus, a separate surface-smoothing process is required. On the other hand, the polyester resin composition includes the talc in an amount and secure excellent releasing properties and heat resistance.

In particular, when the talc is included in an amount of greater than 1 part by weight, a smooth metal deposition layer is difficult to form due to increased surface roughness when a metal is directly deposited, and thus, a separate surface-smoothing process is required. On the other hand, the polyester resin composition includes the talc in an amount of 0.01 to 1 part by weight and thus, may secure low surface roughness and form a smooth metal deposition layer and thus, realize excellent releasing properties and heat resistance.

## (C) Ethylene Acrylic acid-based Copolymer

The ethylene acrylic acid-based copolymer refers to an ethylene acrylic acid copolymer and an ethylene acrylic acid ester copolymer.

Specifically, the ethylene acrylic acid-based copolymer refers to an ethylene acrylic acid copolymer, an ethylene (meth)crylic acid copolymer, an ethylene acrylic acid ester copolymer, an ethylene (meth)crylic acid ester copolymer, or a combination thereof.

A monomer constituting such a copolymer may be an acrylic acid ester monomer such as methyl acrylate, ethyl acrylate, propyl acrylate, butyl acrylate, pentyl acrylate, hexyl acrylate, octyl acrylate, 2-ethylhexyl acrylate, cyclohexyl acrylate, dodecyl acrylate, octadecyl acrylate, phenyl acrylate, benzyl acrylate, and the like.

In addition, (meth)crylic acid ester monomer may be methyl (meth)crylate, ethyl (meth)crylate, propyl (meth)crylate, butyl (meth)crylate, pentyl (meth)crylate, hexyl (meth)crylate, octyl (meth)crylate, 2-ethylhexyl (meth)crylate, cyclohexyl (meth)crylate, dodecyl (meth)crylate, octadecyl (meth)crylate, phenyl (meth)crylate, benzyl (meth)crylate, and the like.

The ethylene acrylic acid-based copolymer may play a role of a lubricant in the polyester resin composition. The ethylene acrylic acid-based copolymer has low volatility at a high temperature and plays a role of suppressing generation of gases and a thermal decomposition material when allowed to stand at the high temperature, and simultaneously, of applying appropriate releasing properties as a lubricant to a resin.

The polyester resin composition includes 0.01 to 0.7 parts by weight of the ethylene acrylic acid-based copolymer based on 100 parts by weight of the polybutylene terephthalate (A). Specifically, the ethylene acrylic acid-based copolymer may be included in an amount of 0.01 to 0.6 parts by weight, 0.01 to 0.5 parts by weight, 0.1 to 0.7 parts by weight, 0.1 to 0.6 parts by weight, or 0.1 to 0.5 parts by weight. The polyester resin composition of the article includes 0.01 to 1 part by weight of the ethylene acrylic acid-based copolymer based on 100 parts by weight of the polybutylene terephthalate (A). Specifically, the ethylene acrylic acid-based copolymer may be included in an amount of 0.01 to 0.9 parts by weight, 0.01 to 0.8 parts by weight, 0.01 to 0.7 parts by weight, 0.01 to 0.6 parts by weight, 0.01 to 0.5 parts by weight, 0.1 to 1 part by weight, 0.1 to 0.9 parts by weight, 0.1 to 0.8 parts by weight, 0.1 to 0.7 parts by weight, 0.1 to 0.6 parts by weight, or 0.1 to 0.5 parts by weight.

When the ethylene acrylic acid-based copolymer is included within the range, the polyester resin composition including the ethylene acrylic acid-based copolymer and an article using the same may secure excellent releasing properties and realize excellent appearance characteristics and heat resistance.

In particular, when the ethylene acrylic acid-based copolymer is included in an amount of greater than 1 part by weight, a polyester resin composition including the ethylene acrylic acid-based copolymer and an article using the same may have deteriorated heat resistance and more generate a volatile material at a high temperature. On the other hand, the polyester resin composition includes 0.01 to 0.7 parts by weight and the article using the same includes 0.01 to 1 part by weight of the ethylene acrylic acid-based copolymer and thus, may decrease generation of the volatile material at a high temperature and simultaneously realize excellent releasing properties and heat resistance.

## (D) Other Additives

The polyester resin composition may further include at least one additive to balance properties or to realize a final purpose if necessary. Specifically, the other additive may be a flame retardant, a surfactant, a nucleating agent, a coupling agent, a filler, a plasticizer, an impact-reinforcing agent, a lubricant, an antibacterial agent, a release agent, an antioxidant, an inorganic material additive, a colorant, an anti-static agent, a pigment, a dye, a flame proofing agent, a heat stabilizer, an ultraviolet (UV) absorber, an ultraviolet (UV) blocking agent, an adhesive, and the like, and may be used singularly or in a combination of two or more.

The other additives may be appropriately included within a range producing no damage on properties of the resin composition, specifically, in an amount of less than or equal to 40 parts by weight and more specifically, 0.1 to 30 parts by weight based on 100 parts by weight of the polybutylene terephthalate.

The above polyester resin composition may be manufactured in a conventional method of manufacturing a resin composition. For example, the components according to one embodiment and other additives are simultaneously mixed, and the mixture is melt-extruded in an extruder and manufactured as a pellet.

Another embodiment of the present invention provides an article manufactured by using the polyester resin composition.

The article may be manufactured in various processes such as injection molding, blow molding, extrusion molding, thermal molding, and the like by using the resin composition.

The article has high smoothness and excellent releasing properties and heat resistance.

In addition, the article less generates a volatile material under a high temperature condition. Specifically, when a fogging test is performed about the article, the volatile material is less generated during heating. For example, when the fogging test is performed by heating the article at 250°C for 3 hours in a transparent close and seal container, a haze change in the transparent close and seal container may be in a range of 0.1 to 4.0 %. Specifically, the haze change may be in a range of 0.1 to 3.0 %, 1.0 to 4.0 %, and 1.0 to 3.0 %. The haze indicates turbidity or cloudiness and may be calculated by the following Calculation Equation 1.

[Calculation Equation 1]

$$\text{Haze (\%)} = \{\text{diffused light}/(\text{diffused-transmitted light} + \text{parallel transmitted light})\} \times 100$$

On the other hand, the article may have surface roughness (Ra) ranging from 1 to 20 nm. The surface roughness indicates roughness on the surface of the article and is marked as arithmetic mean roughness (Ra). The arithmetic mean roughness (Ra) is obtained by summing lower and upper areas of a central line in a measurement section and dividing the area sum by a length in the measurement section.

The article may have a heat distortion temperature (HDT) ranging from 180 to 190 °C. The result shows that the article manufactured by using the polyester resin composition has excellent heat resistance.

Hereinafter, the present invention is illustrated in more detail with reference to examples and comparative examples. However, the following examples and comparative examples are provided for the purpose of descriptions and the present invention is not limited thereto.

**Examples 1 and 2 and Comparative Examples 1 to 7**

A pellet-shaped resin composition was manufactured by mixing the components according to the following amounts provided in the following Table 1. The composition was extruded by using a twin-screw extruder having L/D=29 and a diameter of 45 mm and setting a barrel temperature at 240 °C.

The manufactured pellet was dried at 100 °C for 2 hours and then, manufactured into a 9 cm×5 cm×0.2 cm-sized specimen for measuring heat resistance (HDT) according to ASTM D648 by using a 6 oz. injection molder and setting a cylinder temperature at 240 °C and a molding temperature at 60°C.

[Table 1]

|  |  | Examples | | Comparative Example | | | | | | |
|---|---|---|---|---|---|---|---|---|---|---|
|  |  | 1 | 2 | 1 | 2 | 3 | 4 | 5 | 6 | 7 |
| (A) polyester | (A-1) PBT (viscosity about 0.83) | 60 | 100 | 60 | 60 | 60 | 60 | 60 | 60 | 60 |
|  | (A-2) PBT (viscosity about 1.10) | 40 | - | 30 | 30 | 40 | 40 | 40 | 40 | 40 |
|  | (A-3) PETG | - | - | 10 | - | - | - | - | - | - |
|  | (A-4) PET | - | - | - | 10 | - | - | - | - | - |
| (B) inorganic filler | (B-1) talc | 0.3 | 0.3 | 0.3 | 0.3 | - | 1.5 | 0.3 | 0.3 | 0.3 |
|  | (B-2) kaolin | - | - | - | - | 0.3 | - | - | - | - |

(continued)

| | | Examples | | Comparative Example | | | | | | |
|---|---|---|---|---|---|---|---|---|---|---|
| | | 1 | 2 | 1 | 2 | 3 | 4 | 5 | 6 | 7 |
| (C) lubricant | (C-1) ethylene acrylic acid copolymer | 0.2 | 0.2 | 0.2 | 0.2 | 0.2 | 0.2 | - | - | 1.5 |
| | (C-2) fatty acid-based lubricant | - | - | - | - | - | - | 0.2 | - | - |
| | (C-3) fluorinated poly olefin-based lubricant | - | - | - | - | - | - | - | 0.2 | - |

Each component used in the Table 1 is illustrated as follows.

(A) Polyester

(A-1 Polybutylene terephthalate having a viscosity of 0.83±0.015 dl/g (PBT, Shinkong Synthetic Fibers Corp.) was used.
(A-2) Polybutylene terephthalate having a viscosity of 1.10±0.02 dl/g (PBT, Shinkong Synthetic Fibers Corp.) was used.
(A-3) Polyethylene terephthalateglycol having a viscosity of 0.78±0.02 dl/g (PETG, SK Chemicals.) was used.
(A-4) Polyethylene terephthalate (PET, SK Chemicals.) having a viscosity of 0.77±0.02 dl/g was used.

(B) Inorganic Filler

(B-1) Talc having an average particle diameter of 1.0μm (Hayashi-Kasei Co., Ltd.) was used.
(B-2) Kaolin having an average particle diameter of 1.0μm (Australian China Clays Ltd.) was used.

(C) Lubricant

(C-1) Ethylene acrylic acid copolymer (Allied Corp., AC-540A) was used.
(C-2) Fatty acid ester neopentyl polyol (N.O.F Corp., UNISTER H-476) was used.
(C-3) Perfluoropolyethylene (Dupont, FLUOROGUARD PCA) was used.

**Evaluation Examples**

The following properties of the manufactured pellet-shaped resins or an injection molding article specimen using the same were evaluated, and the results are provided in the following Table 2.

(1) Fogging Test

The manufactured pellets were put in a transparent close and seal container and heated at 250°C for 3 hours, and a haze change before and after heating the transparent close and seal container was measured. The lower the haze change was, the smaller a volatile material was.

(2) Heat Resistance

Thermal distortion temperature (HDT) of the manufactured injection molding article specimen was measured according to ASTM D648. (a load of 0.45 MP)

(3) Surface Roughness (Ra)

The surface roughness (Ra) of the manufactured 9 cm×5 cm×0.2 cm-sized injection molding specimen was measured. The surface roughness was measured by using a WYKO NT1100 optical profilometer made by Veeco Instruments Inc. The lower the surface roughness was, the better smooth surface the article had.

(4) Releasing Properties

When the manufactured pellets were injection-molded into a cup-shaped article, strength loaded to a releasing pin during the ejection was measured by using a sensor. The lower the strength was, the better releasing properties were.

[Table 2]

| | Examples | | Comparative Examples | | | | | | |
|---|---|---|---|---|---|---|---|---|---|
| | 1 | 2 | 1 | 2 | 3 | 4 | 5 | 6 | 7 |
| Haze change (%) | 2.48 | 1.98 | 4.32 | 4.57 | 2.56 | 4.86 | 6.36 | 4.73 | 6.54 |
| HDT (°C) | 180 | 182 | 170 | 175 | 165 | 183 | 180 | 180 | 178 |
| Surface roughness (Ra) (nm) | 15.9 | 16.6 | 15.2 | 15.8 | 15.6 | 42.5 | 15.7 | 15.7 | 14.2 |
| Releasing properties (N) | 1101 | 1082 | 980 | 985 | 1114 | 1075 | 1103 | 1103 | 857 |

As shown in Table 2, Comparative Examples 1 and 2 using PET or PETG had a problem of deteriorating thermal distortion temperature (HDT), that is, heat resistance.

Comparative Example 3 using kaolin instead of talc as an inorganic filler showed a sharply deteriorated thermal distortion temperature (HDT).

Comparative Example 4 excessively including talc showed an effect of a little increasing a thermal distortion temperature (HDT) but increasing surface roughness.

Comparative Examples 5 and 6 respectively used a fatty acid-based lubricant and a fluorinated polyolefin-based lubricant, and Comparative Example 7 excessively used an ethylene acrylic acid-based copolymer and thus, had a problem of a high haze change during the fogging evaluation, that is, excessive generation of a volatile component at a high temperature.

On the other hand, Examples 1 and 2 showed smaller generation of the volatile component at a high temperature and lower surface roughness and thus, excellent surface smoothness compared to Comparative Examples 1 to 7. In addition, Examples 1 and 2 also showed excellent heat resistance and releasing properties.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

**Claims**

1. A polyester resin composition, comprising

   (A) 100 parts by weight of polybutylene terephthalate, and
   (B) 0.01 to 1 parts by weight of talc and
   (C) 0.01 to 0.7 parts by weight of an ethylene acrylic acid-based copolymer

   based on 100 parts by weight of the polybutylene terephthalate (A),
   wherein other polyesters except for the polybutylene terephthalate (A) are less than 10% by weight.

2. The polyester resin composition of claim 1, wherein the polybutylene terephthalate

   (A) has a viscosity measured according to ASTM D2857 ranging from 0.6 to 1.5 dl/g.

3. The polyester resin composition of claim 1 or 2, wherein the talc (B) has an average particle diameter ranging from 0.1 $\mu$m to 10 $\mu$m.

4. An article obtainable by using the polyester resin composition according to any one of claims 1 to 3.

5. An article obtainable by using a polyester resin composition, the composition comprising

(A) 100 parts by weight of polybutylene terephthalate, and
(B) 0.01 to 1 parts by weight of talc and
(C) 0.01 to 1 parts by weight of an ethylene acrylic acid-based copolymer

based on 100 parts by weight of the polybutylene terephthalate (A),
wherein other polyesters except for the polybutylene terephthalate (A) are less than 10% by weight,
wherein the article is a head lamp bezel for a vehicle or a reflector.

6. The article of claim 5, wherein in the polyester resin composition the polybutylene terephthalate (A) has a viscosity measured according to ASTM D2857 ranging from 0.6 to 1.5 dl/g.

7. The article of claim 5 or 6, wherein in the polyester resin composition the talc (B) has an average particle diameter ranging from 0.1 $\mu$m to 10 $\mu$m.

8. The article of claim 4, 5, 6 or 7, which has a haze change ranging from 0.1 to 4.0 %, surface roughness (Ra) ranging from 1 to 20 nm obtained by summing lower and upper areas of a central line in a measurement section and dividing the area sum by a length in the measurement section, and
a thermal distortion temperature (HDT) measured according to ASTM D648 ranging from 180 to 190°C in its fogging evaluation under a condition of 250°C/3 hours.

**Patentansprüche**

1. Eine Polyesterharzzusammensetzung, umfassend

(A) 100 Gewichtsteile Polybutylenterephthalat und
(B) 0,01 bis 1 Gewichtsteile Talk und
(C) 0,01 bis 0,7 Gewichtsteile eines Copolymers auf Ethylen-Acrylsäure-Basis,

bezogen auf 100 Gewichtsteile des Polybutylenterephthalats (A),
wobei andere Polyester mit Ausnahme des Polybutylenterephthalats (A) weniger als 10 Gew.-% ausmachen.

2. Die Polyesterharzzusammensetzung nach Anspruch 1, wobei das Polybutylenterephthalat (A) eine Viskosität bei Messung gemäß ASTM D2857 im Bereich von 0,6 bis 1,5 dl/g aufweist.

3. Die Polyesterharzzusammensetzung nach Anspruch 1 oder 2, wobei der Talk (B) einen mittleren Partikeldurchmesser im Bereich von 0,1 $\mu$m bis 10 $\mu$m aufweist.

4. Ein Gegenstand, der durch Verwendung der Polyesterharzzusammensetzung gemäß einem der Ansprüche 1 bis 3 erhältlich ist.

5. Ein Gegenstand, der durch Verwendung einer
Polyesterharzzusammensetzung erhältlich ist, wobei die Zusammensetzung umfasst:

(A) 100 Gewichtsteile Polybutylenterephthalat und
(B) 0,01 bis 1 Gewichtsteile Talk und
(C) 0,01 bis 1 Gewichtsteile eines Copolymers auf Ethylen-Acrylsäure-Basis,

bezogen auf 100 Gewichtsteile des Polybutylenterephthalats (A),
wobei andere Polyester mit Ausnahme des Polybutylenterephthalats (A) weniger als 10 Gew.-% ausmachen,
wobei der Gegenstand eine Scheinwerfereinfassung für ein Fahrzeug oder ein Reflektor ist.

6. Der Gegenstand nach Anspruch 5, wobei in der
Polyesterharzzusammensetzung das Polybutylenterephthalat (A) eine Viskosität bei Messung gemäß ASTM D2857 im Bereich von 0,6 bis 1,5 dl/g aufweist.

**7.** Der Gegenstand nach Anspruch 5 oder 6, wobei in der Polyesterharzzusammensetzung der Talk (B) einen mittleren Partikeldurchmesser im Bereich von 0,1 $\mu$m bis 10 $\mu$m aufweist.

**8.** Der Gegenstand nach Anspruch 4, 5, 6 oder 7, der eine Trübungsänderung im Bereich von 0,1 bis 4,0 %, eine Oberflächenrauigkeit (Ra) im Bereich von 1 bis 20 nm, erhalten durch Summieren der unteren und oberen Flächen einer zentralen Linie in einem Messabschnitt und Teilen der Flächensumme durch eine Länge in dem Messabschnitt, und
eine Formbeständigkeit in der Wärme (HDT) bei Messung gemäß ASTM D648 im Bereich von 180 bis 190°C bei seiner Fogging- bzw. Beschlagungs-Bewertung unter einer Bedingung von 250°C/3 Stunden aufweist.

**Revendications**

**1.** Composition de résine polyester comprenant

(A) 100 parties en poids d'un poly(téréphtalate de butylène) et
(B) 0,01 à 1 partie en poids de talc et
(C) 0,01 à 0,7 partie en poids d'un copolymère à base d'éthylène-acide acrylique

pour 100 parties en poids du poly(téréphtalate de butylène) (A),
où d'autres polyesters en dehors du poly(téréphtalate de butylène) (A) sont présents à moins de 10 % en poids.

**2.** Composition de résine polyester de la revendication 1, où le poly(téréphtalate de butylène) (A) a une viscosité, mesurée conformément à la norme ASTM D2857, qui va de 0,6 à 1,5 dl/g.

**3.** Composition de résine polyester de la revendication 1 ou 2, où le talc (B) a un diamètre particulaire moyen qui va de 0,1 $\mu$m à 10 $\mu$m.

**4.** Article pouvant être obtenu en utilisant la composition de résine polyester selon l'une quelconque des revendications 1 à 3.

**5.** Article pouvant être obtenu en utilisant une composition de résine polyester, la composition comprenant

(A) 100 parties en poids d'un poly(téréphtalate de butylène) et
(B) 0,01 à 1 partie en poids de talc et
(C) 0,01 à 1 partie en poids d'un copolymère à base d'éthylène-acide acrylique

pour 100 parties en poids du poly(téréphtalate de butylène) (A),
où d'autres polyesters en dehors du poly(téréphtalate de butylène) (A) sont présents à moins de 10 % en poids,
où l'article est une lunette d'encadrement pour un phare de véhicule ou une lampe de réflecteur.

**6.** Article de la revendication 5 où, dans la composition de résine polyester, le poly(téréphtalate de butylène) (A) a une viscosité, mesurée conformément à la norme ASTM D2857, qui va de 0,6 à 1,5 dl/g.

**7.** Article de la revendication 5 ou 6 où, dans la composition de résine polyester, le talc (B) a un diamètre particulaire moyen qui va de 0,1 $\mu$m à 10 $\mu$m.

**8.** Article de la revendication 4, 5, 6 ou 7 ayant une variation du flou qui va de 0,1 à 4,0 %, une rugosité de surface (Ra), obtenue en ajoutant les aires inférieure et supérieure par rapport à une ligne centrale dans une section de mesure et en divisant la somme des aires par une longueur de la section de mesure, qui va de 1 à 20 nm, et une température de fléchissement sous charge (HDT), mesurée conformément à la norme ASTM D648, qui va de 180 à 190 °C dans son évaluation d'embuage dans une condition de 250 °C/3 heures.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020062403
- EP 1942144 A